# EUROPÄISCHE PATENTSCHRIFT

(11) **EP 2 488 390 B1**
(45) Veröffentlichungstag und Bekanntmachung des Hinweises auf die Patenterteilung: **13.07.2016**
(21) Anmeldenummer: 10768471.4
(22) Anmeldetag: 14.10.2010
(51) Int. Cl.: B60Q 1/076

(54) **BELEUCHTUNGSVORRICHTUNG FÜR FAHRZEUGE**
LIGHTING DEVICE FOR VEHICLES
DISPOSITIF D'ÉCLAIRAGE POUR VÉHICULES

(30) Priorität: 15.10.2009 DE 102009049238
(43) Veröffentlichungstag der Anmeldung: 22.08.2012
(73) Patentinhaber: Hella KGaA Hueck & Co, 59552 Lippstadt (DE)
(72) Erfinder: NIEDENZU, Thomas, Oelde 59302 (DE)
(74) Vertreter: Downar, Michael
(86) Internationale Anmeldenummer: PCT/EP2010/065378
(87) Internationale Veröffentlichungsnummer: WO 2011/045358

(56) Entgegenhaltungen:
- EP-A2- 1 652 726
- EP-A2- 1 669 665
- DE-A1- 19 933 663

## Beschreibung

Die Erfindung betrifft eine Beleuchtungsvorrichtung für Fahrzeuge nach dem Oberbegriff des Patentanspruchs 1.

Aus der DE 10 2007 006 258 A1 ist eine Beleuchtungsvorrichtung für Fahrzeuge bekannt, in der mehrere Lichteinheiten zur Erzeugung von Lichtverteilungen integriert sind. Die Lichteinheiten weisen jeweils eine Anzahl von Lichtquellen und von in Hauptabstrahlrichtung vor denselben angeordneten Vorsatzoptiken auf. Beispielsweise dient eine erste Lichteinheit zur Erzeugung einer Grundlichtverteilung, während eine zweite Lichteinheit zur Erzeugung einer Abblendlicht-Spotlichtverteilung dient. Hiermit kann die Bereitstellung von einer Abblendlichtfunktion bzw. Fernlichtfunktion gewährleistet sein. Zur Grundeinstellung einer Hell/Dunkel-Grenze der Beleuchtungsvorrichtung sind die Lichtquellen der Lichteinheiten an einem ersten Rahmen befestigt, der vertikal verschiebbar ist zu einem zweiten Rahmen angeordnet ist, an dem die als Linsen ausgebildeten Vorsatzoptiken befestigt sind. Der zweite Rahmen ist horizontal verschiebbar zu einem feststehenden Tragrahmen angeordnet, der fest mit einem Gehäuse der Beleuchtungsvorrichtung verbunden ist. Durch kombinierte horizontale und vertikale Verschiebung des zweiten Rahmens bzw. des ersten Rahmens kann somit eine Grundeinstellung der Beleuchtungsvorrichtung bzw. können weitere Lichtfunktionen wie Kurvenlicht, Schlechtwetterlicht, Nebellicht oder Tagfahrlicht erzeugt werden. Dadurch, dass die Lichtquellen auf der einen Seite und die Linsen auf der anderen Seite jeweils dem gemeinsamen ersten Rahmen bzw. zweiten Rahmen zugeordnet sind, ist der Relativabstand zwischen den Lichtquellen einerseits und der Relativabstand zwischen den Linsen andererseits stets der gleiche. Aus Platzgründen kann es jedoch erforderlich sein, dass die Lichtquellen der Lichteinheit jeweils starr mit der vorgelagerten Linse verbunden sind. Zur Grundeinstellung der Lichteinheiten müssen diese dann um entsprechende Achsen verschwenkbar angeordnet sein. Bei relativ nah zueinander angeordneten Lichteinheiten kann es bei einer gegenläufigen Relativbewegung zu einer unerwünschten Kollision von benachbarten Lichteinheiten kommen.

Aus der DE 199 33 663 A1 ist eine Beleuchtungsvorrichtung für Fahrzeuge mit einem Gehäuse bekannt, in dem eine Mehrzahl von Lichteinheiten angeordnet sind. Die Lichteinheiten sind an einem gemeinsamen Tragrahmen befestigt, der seinerseits schwenkbar an dem Gehäuse befestigt ist. Zur Erzeugung eines Kurvenlichtes ist eine der Lichteinheiten um eine Schwenkachse schwenkbar zu dem Tragrahmen angeordnet, die senkrecht zu einer weiteren Verschwenkachse verläuft, um die der Tragrahmen schwenkbar zu dem Gehäuse gelagert ist.

Auch die aus der EP 1 669 665 A2 und der EP 1 652 726 A2 offenbarten Beleuchtungsvorrichtungen weisen keine parallel zueinander verlaufende Verschwenkachsen auf, wobei um eine erste Verschwenkachse eine erste Lichteinheit relativ zu einem Tragrahmen und um eine zweite Schwenkachse der Tragrahmen relativ zu einem Gehäuse verschwenkbar angeordnet sind.

Aufgabe der vorliegenden Erfindung ist es daher, eine Beleuchtungsvorrichtung für Fahrzeuge mit einer Mehrzahl von Lichteinheiten, die jeweils starr miteinander verbundene Lichtquellen und Vorsatzoptiken aufweisen, derart weiterzubilden, dass eine Grundeinstellung einer Hell/Dunkel-Grenze bzw. weitere zusätzliche Lichtfunktionen unter Minimierung der Bauraumabstände zwischen mindestens zwei Lichteinheiten gewährleistet ist.

Zur Lösung dieser Aufgabe weist die Erfindung die Merkmale des Patentanspruchs 1 auf.

Nach der Erfindung bestehen Lichteinheiten aus einer Anzahl von Lichtquellen und jeweils denselben vorgelagerten Vorsatzoptiken, die starr in einem gemeinsamen Lichteinheit-Rahmen angeordnet sind. Der Lichteinheit-Rahmen dient quasi als Gehäuse für die betreffende Lichteinheit. Zur Grundeinstellung der Beleuchtungsvorrichtung ist zumindest ein Lichteinheit-Rahmen relativ zu einem alle Lichteinheiten aufnehmenden Tragrahmen um eine vorgegebene erste Verschwenkachse verschwenkbar angeordnet. Darüber hinaus ist der Tragrahmen um eine weitere vorgegebene zweite Verschwenkachse verschwenkbar zu einem Gehäuse der Beleuchtungsvorrichtung angeordnet. Die erste Verschwenkachse ist parallel versetzt zu der zweiten Verschwenkachse angeordnet. Somit findet bei der Verstellung des Lichteinheit-Rahmens eine überlagerte Schwenkbewegung statt, bei der nur ein Teil der gesamten Schwenkbewegung eines ersten Lichteinheit-Rahmens durch eine Relaitvbewegung zu einem benachbarten Lichteinheit-Rahmen erfolgt. Dadurch, dass ein Teil der Schwenkbewegung des Lichteinheit-Rahmens durch Verschwenken des Tragrahmens bewirkt wird, bei der gleichzeitig der benachbarte Lichteinheit-Rahmen einer zweiten Lichteinheit mitbewegt wird, kann der verstellfreie Raum zwischen den benachbarten Lichteinheiten bzw. benachbarten Lichteinheit-Rahmen klein gehalten werden. Sind die Lichteinheit-Rahmen benachbarter Lichteinheiten langgestreckt ausgebildet, kann somit das Spaltmaß zwischen diesen beiden Lichteinheiten auf ein Minimalmaß reduziert werden.

Nach der Erfindung ist eine Mehrzahl von Lichteinheiten an einem gemeinsamen Tragrahmen gehaltert. Die erste Verschwenkachse, um die der Lichteinheit-Rahmen einer ersten Lichteinheit verschwenkbar ist, und die zweite Verschwenkachse, um die der Tragrahmen verschwenkbar ist, sind parallel versetzt und in horizontaler Richtung verlaufend angeordnet. Vorteilhaft kann die Verschwenkung des Tragrahmens zur Grundeinstellung der Beleuchtungsvorrichtung eingesetzt werden, während die Verstellung der ersten Lichteinheit für dynamische Lichtfunktionen, wie beispielsweise Leuchtweitenregelung, Autobahnlicht etc. genutzt werden kann. Es kann somit eine mechanische Entkopplung zwischen der Grundeinstellung der Beleuchtungsvorrichtung einerseits und der Bereitstellung von dynamischen Lichtfunktionen der Beleuchtungsvorrichtung andererseits bewirkt werden, wobei die erforderlichen Verstellwege relativ zu den Lichteinheit-Rahmen benachbarter Lichteinheiten reduziert wird.

Nach einer Weiterbildung der Erfindung ist benachbart zu der ersten Lichteinheit eine zweite Lichteinheit angeordnet, die zur Erzeugung einer zweiten Lichtverteilung dient. Diese zweite Lichteinheit weist einen Lichteinheit-Rahmen auf, der drehfest zu dem Tragrahmen angeordnet ist. Während die erste Lichteinheit dafür ausgelegt ist, eine Abblendlichtverteilung zu erzeugen, kann die zweite Lichteinheit derart ausgelegt sein, dass durch Hinzuschalten derselben zu der ersten Lichteinheit eine Fernlichtverteilung entsteht. Dadurch, dass die zweite Lichteinheit vorzugsweise starr zu dem Tragrahmen angeordnet ist, kann die erste Lichteinheit näher zu der zweiten Lichteinheit angeordnet sein, da eine Kollision der beiden Lichteinheiten durch eine etwaige relative Bewegung derselben gegeneinander vermieden wird.

Nach einer Weiterbildung der Erfindung sind die erste Lichteinheit und die zweite Lichteinheit langgestreckt ausgebildet und verlaufen jeweils vertikal versetzt zueinander in einer horizontalen Richtung. Die beiden Lichteinheiten weisen jeweils eine Mehrzahl von reihenförmig angeordneten Lichtmodulen auf, wobei die Lichtmodule jeweils aus der Lichtquelle und der Vorsatzoptik bestehen. Dadurch, dass die vorgegebene Lichtstärke durch benachbart zueinander angeordnete leistenförmige Lichteinheiten erzeugt wird, kann der Höhenaufbau der Beleuchtungsvorrichtung relativ niedrig ausfallen.

Nach einer Weiterbildung der Erfindung ist eine dritte Lichteinheit zur Erzeugung einer dritten Lichtverteilung in horizontaler Richtung benachbart zu der ersten Lichteinheit und/oder der zweiten Lichteinheit angeordnet. Die dritte Lichteinheit ist um eine in horizontaler Richtung verlaufende dritte Verschwenkachse und um eine in vertikaler Richtung verlaufende vierte Verschwenkachse relativ zu dem Tragrahmen verschwenkbar angeordnet. Die dritte Lichteinheit weist eine Reihe von in vertikaler Richtung verlaufenden Lichtmodulen auf, so dass insbesondere ein 15°-Anstieg der Hell/Dunkel-Grenze bei einer Abblendlichtverteilung einstellbar ist.

Nach einer Weiterbildung der Erfindung sind die erste Lichteinheit und die dritte Lichteinheit über eine Koppeleinrichtung miteinander verbunden, wobei an der Koppeleinrichtung ein einziges elektrisches Verstellmittel angreift. Eine Manschette der Koppeleinrichtung bewirkt, dass die eingeleitete Kraft derart auf die erste Lichteinheit und die dritte Lichteinheit aufgeteilt wird, dass die erste Lichteinheit und die dritte Lichteinheit in horizontaler Richtung um einen Winkel versetzt zueinander angeordnete Verschwenkwinkel verstellbar sind. Die erste Verschwenkachse und die dritte Verschwenkachse verlaufen somit zwar jeweils in horizontaler Richtung, sind jedoch in horizontaler Richtung um einen Winkel versetzt zueinander angeordnet. Vorteilhaft kann hierdurch der Verstellaufwand zum Verstellen der ersten Lichteinheit und der dritten Lichteinheit verringert werden. Darüber hinaus ermöglicht die verteilte Krafteinleitung, dass die erste Lichteinheit gepfeilt angeordnet sein kann, während sich die dritte Lichteinheit in vertikaler Richtung erstreckt.

Nach einer Weiterbildung der Erfindung befinden sich mindestens zwei Drehgelenke, durch die die erste Verschwenkachse verläuft, zwischen zwei Lichtmodulen der zweiten Lichteinheit in einem vorspringenden Bereich derselben. Dadurch, dass die erste Verschwenkachse relativ nah an der Längsachse der zweiten Lichteinheit angeordnet ist, kann der Verstellweg der zweiten Lichteinheit relativ klein gehalten werden.

Weitere Vorteile der Erfindung ergeben sich den weiteren Unteransprüchen.

Ein Ausführungsbeispiel der Erfindung wird nachfolgend anhand der Zeichnungen näher erläutert.

Es zeigen:
- Fig. 1: eine schematische Vorderansicht einer Beleuchtungsvorrichtung und
- Fig. 2: eine schematische Draufsicht der Beleuchtungsvorrichtung.

Eine Beleuchtungsvorrichtung für Fahrzeuge ist beispielsweise als Scheinwerfer ausgebildet. Dieser umfasst ein nicht dargestelltes Gehäuse, in dem eine Anzahl von Lichteinheiten angeordnet ist. Eine in Hauptabstrahlrichtung H der Beleuchtungsvorrichtung vorne liegende Öffnung des Gehäuses ist durch eine glasklare Abdeckscheibe abgedeckt.

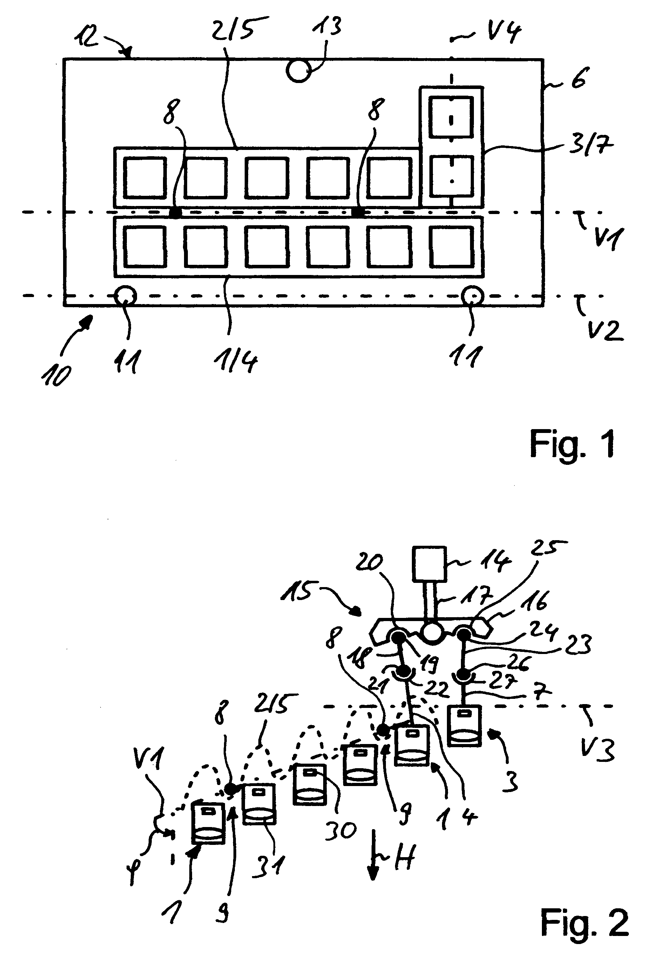

Ein Scheinwerfer nach der Ausführungsform gemäß den Figuren 1 und 2 weist im Wesentlichen eine erste Lichteinheit 1 zur Erzeugung einer ersten Lichtverteilung, eine zweite Lichteinheit zur Erzeugung einer zweiten Lichtverteilung und eine dritte Lichteinheit 3 zur Erzeugung einer dritten Lichtverteilung auf.

Die erste Lichteinheit 1 ist langgestreckt ausgebildet und erstreckt sich in horizontaler Richtung. Die erste Lichteinheit 1 weist einen Lichteinheit-Rahmen 4 auf, der in horizontaler Richtung reihenförmig angeordnete Kammern aufweist zur Aufnahme jeweils einer Lichtquelle 30 und einer in Hauptabstrahlrichtung H vor der Lichtquelle 30 angeordneten Vorsatzoptik 31. Jede Kammer bildet zusammen mit der ihr zugeordneten Lichtquelle 30 und der Vorsatzoptik 31 ein Lichtmodul. Die jeweils eine Lichtquelle 30 und eine Vorsatzoptik 31 enthaltenden Kammern sind starr miteinander verbunden. Wie insbesondere aus Figur 2 ersichtlich ist, erstreckt sich der Lichteinheit-Rahmen 4 der ersten Lichteinheit 1 gepfeilt unter Bildung eines Pfeilungswinkels ϕ. Die Kammern sind somit in der horizontalen Erstreckungsebene in Hauptabstrahlrichtung H versetzt zueinander angeordnet. Da die Lichtmodule einreihig in der horizontalen Ebene angeordnet sind, weist die erste Lichteinheit 1 einen relativ niedrigen Aufbau in vertikaler Richtung auf.

Die Lichtquellen 30 der Leuchteinheiten 1, 2, 3 sind vorzugsweise als Leuchtelemente, insbesondere LED-Chips, ausgebildet. Die Vorsatzoptiken 31 der Lichteinheiten 1, 2, 3 sind vorzugsweise als Linsen ausgebildet, die in einem vorgegebenen Abstand zu den LEDs angeordnet sind.

Die erste Lichteinheit 1 erzeugt eine relativ breite erste Lichtverteilung zur Bildung einer Abblendlichtfunktion.

Die zweite Lichteinheit 2 weist einen Lichteinheit-Rahmen 5 auf, der - wie der Lichteinheit-Rahmen 4 der ersten Lichteinheit 1 - langgestreckt in horizontaler Richtung, und zwar gepfeilt unter dem Pfeilungswinkel ϕ zur Hauptabstrahlrichtung H angeordnet ist. Der Lichteinheit-Rahmen 5 der zweiten Lichteinheit 2 erstreckt sich im Wesentlichen in vertikaler Richtung oberhalb der ersten Lichteinheit 1, wobei eine Mehrzahl von Lichtmodulen in einer einzigen Reihe angeordnet sind.

Im Unterschied zu der ersten Lichteinheit 1 sind die Lichtmodule der zweiten Lichteinheit 2 derart ausgebildet, dass durch Zuschaltung der zweiten Lichteinheit 2 zu der ersten Lichteinheit 1 bzw. der dritten Lichteinheit 3 eine Fernlichtfunktion erzeugt wird. In Übereinstimmung zu der ersten Lichteinheit 1 weisen die Lichtmodule der zweiten Lichteinheit 2 mehrere Kammern mit jeweils einer Lichtquelle 30 und einer Vorsatzoptik 31 auf. Im Unterschied zu der ersten Lichteinheit 1 ist der Lichteinheit-Rahmen 5 der zweiten Lichteinheit 2 drehfest bzw. starr zu einem Tragrahmen 6 angeordnet, der fest bzw. starr an dem Gehäuse des Scheinwerfers montiert ist. Der Lichteinheit-Rahmen 5 der zweiten Lichteinheit 2 kann beispielsweise in entsprechende Aufnahmen des Tragrahmens 6 eingeschoben und dann mittels einer Rast- oder Klemmverbindung an demselben befestigt sein.

Die dritte Lichteinheit 3 weist einen Lichteinheit-Rahmen 7 auf, der sich an einem Ende des Lichteinheit-Rahmens 4 der ersten Lichteinheit 1 in vertikaler Richtung nach oben erstreckt. Im vorliegenden Ausführungsbeispiel weist der Lichteinheit-Rahmen 7 der dritten Lichteinheit 3 zwei Lichtmodule auf, die reihenförmig in vertikaler Richtung angeordnet sind.

Im Unterschied zu der zweiten Lichteinheit 2 ist die erste Lichteinheit 1 um eine horizontal verlaufende erste Verschwenkachse V1 verschwenkbar zu dem Tragrahmen 6 gelagert. Im vorliegenden Ausführungsbeispiel verläuft die erste Verschwenkachse V1 unter Bildung des Pfeilungswinkels ϕ zu der Hauptabstrahlrichtung H und in einem Bereich zwischen der ersten Lichteinheit 1 und der zweiten Lichteinheit 2. Damit die erste Verschwenkachse V1 relativ nah an dem Lichteinheit-Rahmen 4 der ersten Lichteinheit 1 angeordnet ist, sind zwei Drehgelenke 8 vorgesehen, die in einem vorspringenden Bereich 9 der Lichtmodule der zweiten Lichteinheit 2 vorzugsweise verdeckt nach außen hin angeordnet sind. Die Drehgelenke 8 zum Verstellen der ersten Lichteinheit 1 um die erste Verschwenkachse V1 sind somit platzsparend angeordnet.

Der Tragrahmen 6, an dem alle Lichteinheiten 1, 2, 3 befestigt sind, ist bezüglich einer zweiten Verschwenkachse V2 verschwenkbar zu dem Gehäuse angeordnet. Die zweite Verschwenkachse V2 verläuft parallel versetzt zu der ersten Verschwenkachse V1, und zwar in einem unteren Randbereich 10 des Tragrahmens 6. Zu diesem Zweck sind in dem unteren Randbereich 10 des Tragrahmens 6 zwei untere Drehlagerpunkte 11 und in einem oberen Randbereich 12 des Tragrahmens 6 einen weiteren Lagerpunkt 13, an dem ein mechanisch betätigbares Verstellmittel angreifbar ist zur manuellen Verschwenkung bzw. Verstellung des Tragrahmens 6 um die zweite Verschwenkachse V2. Die Grundeinstellung der Beleuchtungsvorrichtung kann somit mechanisch erfolgen, wobei der Tragrahmen 6 um beispielsweise maximal 3° um die horizontale zweite Verschwenkachse V2 verschwenkbar ist. Beispielsweise kann diese Grundeinstellung durch manuelle Betätigung mittels eines Hilfswerkzeuges erfolgen.

Da die erste Lichteinheit 1 relativ zu dem Tragrahmen 6 um die erste Verschwenkachse V1 insbesondere mittels eines elektrisch betätigbaren Verstellmittels 14 um maximal 2° verstellbar ist, kann eine absolute Verstellung der Lichteinheit 1 durch Überlagerung der Verstellung des Tragrahmens 6 bezüglich des Gehäuses einerseits und der Verstellung der ersten Lichteinheit 1 zu dem Tragrahmen 6 andererseits von maximal 5° erfolgen. Da die zweite Lichteinheit 2 fest zu dem Tragrahmen 6 angeordnet ist, erfolgt bezüglich der zweiten Lichteinheit 2 lediglich eine Verstellung um maximal 2°. Aus diesem Grund können die erste Lichteinheit 1 und die zweite Lichteinheit 2 relativ nah aneinander unter Bildung eines relativ geringen Spaltmaßes angeordnet sein, was die vertikale Höhe der Beleuchtungsvorrichtung reduziert.

Die dritte Lichteinheit 3 ist mittels desselben elektrischen Verstellmittels 14 um eine dritte Verschwenkachse V3 verstellbar gelagert, wobei die dritte Verschwenkachse V3 - wie die erste Verschwenkachse V1 - in einer horizontalen Richtung verläuft. Wie aus Figur 2 ersichtlich ist, verläuft die dritte Verschwenkachse V3 jedoch senkrecht zur Hauptabstrahlrichtung H und schließt somit mit der ersten Verschwenkachse V1 den Pfeilungswinkel ϕ ein. Ferner ist die dritte Lichteinheit 3 um eine vertikal verlaufende vierte Verschwenkachse V4 schwenkbar gelagert, um im Rahmen der Grundeinstellung den 15°-Anstiegwinkel der Hell/Dunkel-Grenze bei der Abblendlichtfunktion einzustellen. Diese Einstellung kann mechanisch oder manuell über nicht dargestellte Zahnradverbindungen erfolgen.

Die von der dritten Lichteinheit 3 erzeugte dritte Lichtverteilung überlagert sich mit der zweiten Lichtverteilung der ersten Lichteinheit 1 zu einer vorgegebenen Abblendlichtverteilung (Abblendlichtfunktion). Damit zur Leuchtweitenregelung oder zur Erzeugung von zusätzlichen Lichtverteilungen wir Autobahnlicht oder dergleichen die erste Lichteinheit 1 und die dritte Lichteinheit 3 gemeinsam um die erste Verschwenkachse V1 bzw. dritte Verschwenkachse V3 verstellbar sind, sind der Lichteinheit-Rahmen 4 der ersten Lichteinheit 1 und der Lichteinheit-Rahmen 7 der dritten Lichteinheit 3 über eine gemeinsame Koppeleinrichtung 15 mit dem elektrischen Verstellmittel 14 verbunden. Die Koppeleinrichtung 15 weist eine Manschette 16 auf, an deren einen Seite eine Kolbenstange 17 des als Verstellmotor ausgebildeten elektrischen Verstellmittels 14 angreift. Zwischen der Manschette 16 und dem Lichteinheit-Rahmen 4 der ersten Lichteinheit 1 ist eine erste Verbindungsstange 18 angeordnet, die über eine Kugelgelenkverbindung zum einen mit der Manschette 16 und zum anderen mit dem Lichteinheit-Rahmen 4 verbunden ist. Zu diesem Zweck ist ein kugelförmiges erstes Ende 19 der ersten Verbindungsstange 18 in einer ersten Pfannenaufnahme 20 der Manschette 16 gelagert. Ein kugelförmiges zweites Ende 21 der ersten Verbindungsstange 18 ist in einer Pfannenaufnahme 22 des Lichteinheit-Rahmens 4 gelagert.

Zwischen der Manschette 16 und dem Lichteinheit-Rahmen 7 erstreckt sich eine zweite Verbindungsstange 23, die mittels einer Kugelgelenkverbindung zum einen mit der Manschette 16 und zum anderen mit dem Lichteinheit-Rahmen 7 verbunden ist. Zu diesem Zweck weist die zweite Verbindungsstange 23 ein kugelförmiges erstes Ende 24 auf, das in einer zweiten Pfannenaufnahme 25 der Manschette 16 gelagert ist. Ein gegenüberliegendes kugelförmiges zweites Ende 26 der Verbindungsstange 23 ist in einer Pfannenaufnahme 27 des Lichteinheit-Rahmen 7 gelagert. Das elektrische Verstellmittel 14 bewirkt eine horizontale Verstellung der Kolbenstange 17, so dass dann die entsprechenden Lichteinheit-Rahmen 4, 7 der ersten Lichteinheit 1 bzw. 3 in Abhängigkeit von der aktuellen Verkehrssituation dynamisch verstellbar sind. Vorteilhaft kann durch die Koppeleinrichtung 15 ein Verschwenken von zwei unterschiedlichen Lichteinheiten 1, 3 um unterschiedlich orientierte Verschwenkachsen V1, V3 bewirkt werden.

Es versteht sich, dass die langgestreckten Lichteinheiten 1, 2 auch in vertikaler Richtung oder in einem Winkel zu einer Horizontalen oder Vertikalen angeordnet sein können. Wesentlich ist, dass der Abstand der ersten Lichteinheit 1 und der zweiten Lichteinheit 2 aufgrund der Überlagerung der Verstellungen klein gehalten werden kann. Beispielsweise ist es auch möglich, dass die zweite Lichteinheit 2 relativ zu dem Tragrahmen 6 verstellbar gelagert ist.

**Bezugszeichenliste**

| | | | |
|---|---|---|---|
| 1 | erste Lichteinheit | H | Hauptabstrahlrichtung |
| 2 | zweite Lichteinheit | V1 | Verschwenkachse |
| 3 | dritte Lichteinheit | V2 | Verschwenkachse |
| 4 | Lichteinheit-Rahmen | V3 | Verschwenkachse |
| 5 | Lichteinheit-Rahmen | V4 | Verschwenkachse |
| 6 | Tragrahmen | ϕ | Pfeilungswinkel |
| 7 | Lichteinheit-Rahmen | | |
| 8 | Drehgelenk | | |
| 9 | vorspringender Bereich | | |
| 10 | unterer Randbereich | | |
| 11 | Drehlagerpunkte | | |
| 12 | oberer Randbereich | | |
| 13 | Lagerpunkt | | |
| 14 | elektrisches Verstellmittel | | |
| 15 | Koppeleinrichtung | | |
| 16 | Manschette | | |
| 17 | Kolbenstange | | |
| 18 | erster Verbindungssteg | | |
| 19 | erstes Ende | | |
| 20 | Pfannenaufnahme | | |
| 21 | zweites Ende | | |
| 22 | Pfannenaufnahme | | |
| 23 | zweiter Verbindungssteg | | |
| 24 | erstes Ende | | |
| 25 | zweite Pfannenaufnahme | | |
| 26 | zweites Ende | | |
| 27 | Pfannenaufnahme | | |
| 30 | Lichtquelle | | |
| 31 | Vorsatzoptik | | |

## Patentansprüche

1. Beleuchtungsvorrichtung für Fahrzeuge, insbesondere Scheinwerfer, mit einem Gehäuse, mit mehreren Lichteinheiten (1, 2, 3) zur Erzeugung mindestens einer Lichtverteilung, wobei die Lichteinheiten (1, 2, 3) in einem gemeinsamen Gehäuse gelagert sind und wobei die Lichteinheiten (1, 2 ,3) jeweils eine Anzahl von Lichtquellen (30) und eine Anzahl von in Hauptabstrahlrichtung (H) vor denselben angeordnete Vorsatzoptiken (31) aufweisen, wobei die Lichteinheiten (1, 2, 3) durch einen Tragrahmen (6) aufgenommen sind, der an dem Gehäuse montiert ist und zur Grundeinstellung der Beleuchtungsvorrichtung dient, wobei die Lichteinheiten (1, 2, 3) jeweils einen Lichteinheit-Rahmen (4, 5, 7) aufweisen, in dem die jeweils den Lichteinheiten (1, 2, 3) zugeordneten Lichtquellen (30) und Vorsatzoptiken (31)
starr angeordnet sind, wobei der Lichteinheit-Rahmen (4) einer ersten Lichteinheit (1) um eine vorgegebene erste Verschwenkachse (V1) verschwenkbar zu dem Tragrahmen (6) angeordnet ist und wobei der Tragrahmen (6) um eine vorgegebene weitere zweite Verschwenkachse (V2) verschwenkbar zu dem Gehäuse angeordnet ist, **dadurch gekennzeichnet, dass** die erste Verschwenkachse (V1), um die der Lichteinheit-Rahmen (4) der ersten Lichteinheit (1) verschwenkbar angeordnet ist, in einer horizontalen Richtung verläuft, und dass die zweite Verschwenkachse (V2), um die der Tragrahmen (6) bezüglich des Gehäuses verschwenkbar angeordnet ist, in horizontaler Richtung in einer zu der ersten Verschwenkachse (V1) beabstandeten Randbereich (10) des Tragrahmens (6) verläuft, wobei die Verstellung des Tragrahmens (6) durch mechanische Verstellmittel und die Verstellung des Lichteinheit-Rahmens (4) der ersten Lichteinheit (1) durch ein elektrisches Verstellmittel (14) erfolgt.

2. Beleuchtungsvorrichtung nach Anspruch 1, **dadurch gekennzeichnet, dass** in vertikaler Richtung benachbart zu der eine erste Lichtverteilung erzeugenden ersten Lichteinheit (1) eine zweite Lichteinheit (2) zur Erzeugung einer zweiten Lichtverteilung angeordnet ist, wobei ein Lichteinheit-Rahmen (5) der zweiten Lichteinheit (2) drehfest mit dem Tragrahmen (6) verbunden ist.

3. Beleuchtungsvorrichtung nach Anspruch 1 oder 2, **dadurch gekennzeichnet, dass** der Lichteinheit-Rahmen (5) der zweiten Lichteinheit (2) durch eine Rast- oder Klemmverbindung mit dem Tragrahmen (6) verbunden ist.

4. Beleuchtungsvorrichtung nach einem der Ansprüche 1 bis 3, **dadurch gekennzeichnet, dass** die erste Lichteinheit (1) und die zweite Lichteinheit (2) langgestreckt ausgebildet sind und/oder in horizontaler Richtung verlaufen, wobei die Lichteinheiten (1, 2) jeweils eine Reihe von jeweils eine Lichtquelle (30) und eine Vorsatzoptik (31) aufweisenden Lichtmodulen aufweisen.

5. Beleuchtungsvorrichtung nach einem der Ansprüche 1 bis 4, **dadurch gekennzeichnet, dass** in horizontaler Richtung neben der ersten Lichteinheit (1) eine dritte Lichteinheit (3) zur Erzeugung einer dritten Lichtverteilung angeordnet ist, die um eine in horizontaler Richtung verlaufende dritte Verschwenkachse (V3) und um eine in vertikaler Richtung verlaufende vierte Verschwenkachse (V4) relativ zu dem Tragrahmen (6) verstellbar gelagert ist.

6. Beleuchtungsvorrichtung nach Anspruch 5, **dadurch gekennzeichnet, dass** die erste Lichteinheit (1) und die dritte Lichteinheit (3) über eine Koppeleinrichtung (15) um die erste Verschwenkachse (V1) und die dritte Verschwenkachse (V3) mittels eines einzigen elektrischen Verstellmittels (14) verstellbar sind, wobei die Koppeleinrichtung (15) eine Manschette (16) mit zwei Kugelgelenkverbindungen aufweist, derart, dass die erste Verschwenkachse (V1) und die dritte Verschwenkachse (V3) einen Winkel (ϕ) bilden.

7. Beleuchtungsvorrichtung nach Anspruch 6, **dadurch gekennzeichnet, dass** die Koppeleinrichtung (15) zwei Verbindungsstangen (18, 23) aufweist, die über ein Kugelgelenk jeweils mit einem ersten Ende (19, 24) an der Manschette (16) und mit einem zweiten Ende (21, 26) an dem Lichteinheit-Rahmen (4) der ersten Lichteinheit (1) bzw. dem Lichteinheit-Rahmen (7) der dritten Lichteinheit (3) befestigt sind.

8. Beleuchtungsvorrichtung nach einem der Ansprüche 1 bis 7, **dadurch gekennzeichnet, dass** die erste Lichteinheit (1) und/oder die zweite Lichteinheit (2) gepfeilt angeordnet sind, wobei sich der Lichteinheit-Rahmen (4) der ersten Lichteinheit (1) und der Lichteinheit-Rahmen (5) der zweiten Lichteinheit (2) in einem Pfeilungswinkel (ϕ) zu der Hauptabstrahlrichtung (H) erstrecken.

9. Beleuchtungsvorrichtung nach einem der Ansprüche 1 bis 8, **dadurch gekennzeichnet, dass** die erste Lichteinheit (1) über mindestens zwei in einem horizontalen Abstand zueinander angeordnete Drehgelenke (8) verschwenkbar um die erste Verschwenkachse (V1) an dem Tragrahmen (6) gehaltert ist, wobei die Drehgelenke (8) jeweils in einem zwischen zwei Lichtmodulen der zweiten Lichteinheit (2) verdeckt in einem in Hauptabstrahlrichtung (H) vorspringenden Bereich (9) angeordnet sind.

## Claims

1. Illumination device for vehicies, specifically headlamps, with a housing, multiple light units (1, 2, 3) for creating, at a minimum, a light distribution setup in which the light units (1, 2, 3) are kept in a single housing and each of the light units (1, 2, 3) has a certain number of light sources (30) and ancillary lenses (31) arranged in the main beam direction (H) in front of these light units. The light units (1, 2, and 3) are held by a support frame (6), which is installed on the housing and used for basic configuration of the illumination device. Each of the light units (1, 2, 3) features a light unit frame (4, 5, 7) in which each of the light sources (30) and attachment lenses (31) assigned to the light units (1, 2, 3) are arranged in a fixed order. The light unit frame (4) of the first light unit (1) is arranged relative to the support frame (6) such that it can swivel around the specified first swivel axis (V1), and the support frame (6) arranged relative to the housing such that it can be swiveled around the specified second swivel axis (V2). This is **characterized by** the fact that the first swivel axis (V1), around which the light unit frame (4) of the first light unit (1) is arranged in a swiveling position, runs in a horizontal direction and the second swivel axis (V2), around which the support frame is in a swiveling position relative to the housing, runs in a horizontal direction relative to an edge (10) of the support frame (6) that is at a distance from the first swivel axis (V1). The support frame (6) is adjusted using a mechanical adjustment drive and the light unit frame (4) of the first light unit (1) using an electrical adjustment drive (14).

2. Illumination device in accordance with Claim 1, **characterized by** the fact that a second light unit (2) for generating a second light distribution that is arranged such that it is adjacent to a first light unit (1) that generates an initial light distribution and a light unit frame (5) for the second light unit (2) is securely connected to the support frame (6) so that it cannot turn.

3. Illumination device in accordance with Claim 1 or 2, **characterized by** the use of a snap-on or clamping connection that connects the light unit frame (5) of the second light unit (2) with the support frame (6).

4. Illumination device in accordance with one of the claims from 1 to 3, **characterized by** the fact that the first light unit (1) and second light unit (2) have elongated designs and/or run in a horizontal direction and each light unit (1, 2) features a series of light modules, each of which has one light source (30) and one ancillary lens (31).

5. Illumination device in accordance with one of the claims from 1 to 4, **characterized by** the fact that a third light unit (3) for generating a third light distribution is positioned next to the first light unit (1) in a horizontal direction. This third light unit is in an adjustable position around a third swivel axis (V3) that runs in a horizontal direction and a fourth swivel axis (V4) that runs in a vertical direction relative to the support frame (6).

6. Illumination device in accordance with Claim 5, **characterized by** the fact that the first light unit (1) and third light unit (3) can be moved around the first swivel axis (V1) and the third swivel axis (V3) using a coupling device (15) powered by a single electrical adjustment drive (14). The coupling device (15) features a sleeve (16) with two ball joint connections such that the first swivel axis (V1) and third swivel axis (V3) form an angle (ϕ).

7. Illumination device in accordance with Claim 6, **characterized by** the fact that the coupling device (15) features two connecting rods (18, 23), each of which is fastened via a ball joint to the sleeve (16) at one end (19, 24), and to the light unit frame (4) of the first light unit (1) or the light unit frame (7) of the third light unit (3) at the other end (21, 26).

8. Illumination device in accordance with one of the claims from 1 to 7, **characterized by** the fact that the first light unit (1) and/or second light unit (2) are arranged in a V-shape, and the light unit frame (4) of the first light unit (1) and light unit frame (5) of the second light unit (2) extend into a V-shaped angle (ϕ) relative to the main beam direction (H).

9. Illumination device in accordance with one of the claims from 1 to 8, **characterized by** the fact that the first light unit (1) is mounted on the support frame (6) and can swivel around the first swivel axis (V1) by means of at least two horizontally arranged swivel joints (8). Each of the swivel joints (8) is concealed in an area (9) in between two light modules of the second light unit (2). This area protrudes in the main beam direction (H).

## Revendications

1. Dispositif d'éclairage pour véhicules, surtout un projecteur, avec un boîtier, avec plusieurs unités lumineuses (1, 2, 3) destinées à engendrer au moins une répartition lumineuse, les unités lumineuses (1, 2, 3) étant montées dans un boîtier commun et les unités lumineuses (1, 2, 3) présentant chaque fois un certain nombre de sources de lumière (30) et un certain nombre d'optiques auxiliaires (31) disposées en amont de celles-ci dans la direction principale de rayonnement (H), les unités lumineuses (1, 2, 3) étant logées dans un cadre support (6) qui est monté sur le boîtier et qui permet le réglage de base du dispositif d'éclairage, les unités lumineuses (1, 2, 3) présentant respectivement un cadre d'unité lumineuse (4, 5, 7) dans lequel les optiques auxiliaires (31) et les sources de lumière (30) associées chaque fois aux unités lumineuses (1, 2, 3) sont disposées de manière fixe, le cadre d'unité lumineuse (4) d'une première unité lumineuse (1) étant disposé par rapport à un cadre support (6) de façon à pouvoir pivoter autour d'un premier axe de pivotement (V1) prédéterminé et le cadre support (6) étant disposé par rapport au boîtier pour pouvoir pivoter autour d'un autre deuxième axe de pivotement (V2) prédéterminé,
**caractérisé en ce que**
le premier axe de pivotement (V1) autour duquel le cadre d'unité lumineuse (4) de la première unité lumineuse (1) est disposé de façon pivotante s'étend dans une direction horizontale et que le deuxième axe de pivotement (V2) autour duquel le cadre support (6) par rapport au boîtier est disposé de façon pivotante s'étend dans une direction horizontale dans une zone marginale (10) du cadre support (6) espacée du premier axe de pivotement (V1), le réglage du cadre support (6) étant réalisé par des moyens de réglage mécaniques et le réglage du cadre d'unité lumineuse (4) de la première unité lumineuse (1) étant réalisé par un moyen de réglage électrique (14).

2. Dispositif d'éclairage selon la revendication 1, **caractérisé en ce qu'**en direction verticale adjacent à une première unité lumineuse (1) engendrant une première répartition lumineuse, une deuxième unité lumineuse (2) est disposée pour engendrer une deuxième répartition lumineuse, un cadre d'unité lumineuse (5) de la deuxième unité lumineuse (2) étant relié de manière fixe au cadre support (6).

3. Dispositif d'éclairage selon la revendication 1 ou 2, **caractérisé en ce que** le cadre d'unité lumineuse (5) de la deuxième unité lumineuse (2) est relié au cadre support (6) par une liaison par enclenchement ou par serrage.

4. Dispositif d'éclairage selon l'une des revendications 1 à 3, **caractérisé en ce que** la première unité lumineuse (1) et la deuxième unité lumineuse (2) s'étendent en longueur et/ou s'étendent dans une direction horizontale, les unité lumineuses (1, 2) présentant respectivement une série de modules lumineux comprenant chaque fois une source de lumière (30) et une optique auxiliaire (31).

5. Dispositif d'éclairage selon l'une des revendications 1 à 4, **caractérisé en ce que** qu'en direction horizontale une troisième unité lumineuse (3) est disposée à côté de la première unité lumineuse (1) pour engendrer une troisième répartition lumineuse, qui est monté réglable autour d'un troisième axe de pivotement (V3) s'étendant dans une direction horizontale et autour d'un quatrième axe de pivotement (V4) s'étendant dans une direction verticale par rapport au cadre support (6).

6. Dispositif d'éclairage selon la revendication 5, **caractérisé en ce que** la première unité lumineuse (1) et la troisième unité lumineuse (3) sont réglables au moyen d'un dispositif de couplage (15) autour du premier axe de pivotement (V1) et du troisième axe de pivotement (V3) par un seul moyen de réglage électrique (14), le dispositif de couplage (15) présentant un manchon (16) avec deux joints à rotule de telle manière que le premier axe de pivotement (V1) et le troisième axe de pivotement (V3) forment un angle (ϕ).

7. Dispositif d'éclairage selon la revendication 6, **caractérisé en ce que** le dispositif de couplage (15) présente deux tiges de liaison (18, 23) qui sont respectivement fixées par l'intermédiaire d'une articulation à rotule avec un premier bout (19, 24) sur le manchon (16) et avec un deuxième bout (21, 26) sur le cadre d'unité lumineuse (4) de la première unité lumineuse (1) ou le cadre d'unité lumineuse (7) de la troisième unité lumineuse (3).

8. Dispositif d'éclairage selon l'une des revendications 1 à 7, **caractérisé en ce que** la première unité lumineuse (1) et/ou la deuxième unité lumineuse (2) sont disposées de manière inclinée, le cadre d'unité lumineuse (4) de la première unité lumineuse (1) et le cadre d'unité lumineuse (5) de la deuxième unité lumineuse (2) s'étendant dans un angle d'inclinaison (ϕ) par rapport à la direction principale de rayonnement (H).

9. Dispositif d'éclairage selon l'une des revendications 1 à 8, **caractérisé en ce que** la première unité lumineuse (1) est fixée de manière pivotante autour le premier axe de pivotement (V1) sur le cadre support (6) sur au moins deux articulations en pivot (8) disposées en une distance horizontale l'une par rapport à l'autre, les articulations en pivot (8) étant respectivement disposées dans une zone saillante (9) de manière cachée entre deux modules lumineux de la deuxième unité lumineuse (2) dans une direction principale de rayonnement (H).
